# EUROPÄISCHE PATENTSCHRIFT

(11) **EP 2 136 938 B1**
(45) Veröffentlichungstag und Bekanntmachung des Hinweises auf die Patenterteilung: **26.03.2014**
(21) Anmeldenummer: 08735550.9
(22) Anmeldetag: 28.03.2008
(51) Int. Cl.: B60S 3/00, B08B 3/00, B08B 3/02

(54) **FAHRZEUGWASCHANLAGE UND VERFAHREN ZUR DOSIERUNG VON ZUSATZSTOFFEN IN BEHANDLUNGSFLÜSSIGKEITEN**
CAR WASH AND METHOD FOR METERING ADDITIVES IN TREATMENT FLUIDS
STATION DE LAVAGE POUR AUTOMOBILE ET PROCÉDÉ DE DOSAGE D'ADJUVANTS DANS DES LIQUIDES DE TRAITEMENT

(30) Priorität: 12.04.2007 DE 102007017615
(43) Veröffentlichungstag der Anmeldung: 30.12.2009
(73) Patentinhaber: WashTec Holding GmbH, 86153 Augsburg (DE)
(72) Erfinder: AUER, Robert, 86391 Stadtbergen (DE)
(74) Vertreter: Charrier, Rapp & Liebau
(86) Internationale Anmeldenummer: PCT/EP2008/053706
(87) Internationale Veröffentlichungsnummer: WO 2008/125456

(56) Entgegenhaltungen:
- EP-A- 1 380 482
- WO-A-01/03859
- DE-A1- 19 704 829
- DE-A1-102004 053 819
- DE-B3- 10 358 999
- DE-U1- 20 115 173
- US-A1- 2004 194 816
- US-A1- 2004 220 817
- US-A1- 2006 107 705

## Beschreibung

Die Erfindung betrifft eine Fahrzeugwaschanlage nach Anspruch 1 und ein Verfahren zur Dosierung von Zusatzstoffen in Behandlungsflüssigkeiten einer Fahrzeugwaschanlage nach dem Anspruch 7.

Bei bekannten Fahrzeugwaschanlagen werden die auf das Fahrzeug aufzubringenden Behandlungsflüssigkeiten mit unterschiedlichen Zusatzstoffen angereichert. Die Zusatzstoffe können beispielsweise Seife, Wasserenthärter oder Reinigungschemikalien sein. Um diese der Behandlungsflüssigkeit, z.B. Wasser, zumischen zu können, werden die oft in Kanistern abgefüllten Zusatzstoffe aus den Kanistern mittels Pumpen in das Leitungssystem der Fahrzeugwaschanlage dosiert. Um die Effizienz derartiger System zu erhöhen, wurden inzwischen die bisherigen Zusatzstoffe durch hochkonzentrierte Zusatzstoffe ersetzt. Da die Dosierung dann aber nicht mehr mit den relativ ungenauen Dosierpumpen erfolgen kann, wurden inzwischen Maßnahmen getroffen, um die Dosierung der hochkonzentrierten Zusatzstoffe in entsprechend kleinen Dosierungen zu ermöglichen.

Ein Beispiel hierfür offenbart die die EP 0 896 914, die ein Fahrzeugwaschsystem mit Benutzung von Waschmittelkonzentraten zeigt. Dort wird zur Dosierung der konzentrierten Chemikalien in die Behandlungsflüssigkeiten ein Konzentrat-Speisesteuerungsblock vorgeschlagen, wobei die bisherige Speisepumpe zur Dosierung hoher Volumina beibehalten werden kann. Da dort durch die Speisepumpe nach wie vor zuviel Konzentrat in die Behandlungsflüssigkeit dosiert würde, sieht der Konzentrat-Speisesteuerungsblock einen Konzentrat-Bypasskanal vor, der das zuviel dosierte Konzentrat vor der Dosierung in die Behandlungsflüssigkeit wieder zurück in ein Konzentratreservoir speist, so dass die richtige Menge in die Behandlungsflüssigkeit dosiert wird. Nachteilig bei dieser Lösung ist, dass bei der Zuführung von mehreren Zusatzstoffen aus unterschiedlichen Kanistern oder Kartuschen mehrer Konzentrat-Speisesteuerungsblöcke vorgesehen werden müssen, so dass der Montageaufwand relativ hoch ist. Auch erlaubt diese Lösung nur einen wenig flexiblen Einsatz unterschiedlicher Zusatzstoffe. Zudem kommt es bei den bekannten Einrichtungen immer wieder zu Fehlern beim Anschließen der Kanister an die richtige Speiseleitung, da es ausschließlich an der Sorgfalt des Bedienpersonals liegt, die richtigen Kanister an die richtigen Speiseleitungen anzuschließen.

Eine weitere Sprühanlage, insbesondere zur Lackierung von Kraftfahrzeugen, offenbart die DE 10 2004 053 819 A1. Dort werden mit genau vordefinierter Sprühmittelmenge gefüllte Lackbehälter in einer Versorgungsebene beidseits der Lackierlinie gepuffert und über eine Versorgungs-Transportvorrichtung sowie eine Ein- und Ausschleusevorrichtung zu Versorgungsandockstellen an einzelnen Lackiermaschinen befördert und an der dortigen Sprühmittelleitung ausgeschleust und für den Lackauftrag dort angedockt. Nach erfolgter Lack-Applikation erfolgt das Einschleusen der Lackbehälter in die Entsorgungstransportvorrichtung, welche die Rückführung der Lackbehälter zur Befüll- und Entleerstation übernimmt. Dies weist den Nachteil auf, dass eine Vielzahl von Lackbehälter zu den Lackiermaschinen hin und her transportiert werden müssen, was aufwendig und zeitraubend ist. Einen verwechslungssicheren Einsatz der einzelnen Lackbehälter ermöglicht diese Sprühanlage nicht ohne weiteres. Durch die vorher festgelegte Applikationsmenge für einen einzigen Farbauftrag in einem Farbbehälter muss für jeden Farbauftrag ein neuer Farbbehälter verwendet werden, eine einfache Dosierung für eine Vielzahl von Auftragsvorgängen ohne Behälterwechsel ist dort nicht vorgesehen.

Um den oben genannten Nachteil zu überwinden und die Verwechslungsgefahr beim Anschließen der Kanister oder Kartuschen zu verringern, offenbart die EP 1 414 682 B1 eine Vorrichtung zur Versorgung einer Fahrzeugwaschanlage mit unterschiedlichen chemischen Zusatzstoffen, die in Kartuschen abgefüllt und diesen je nach Bedarf kontinuierlich entnehmbar sind. Die Kartuschen unterscheiden sich durch eine spezielle Formgebung voneinander, ebenso wie die Aufnahmevorrichtungen, in die die Kartuschen eingesetzt werden, sich entsprechend unterscheiden. Folglich kann eine spezielle Kartusche nur in eine Aufnahmevorrichtung eingesetzt werden, die an die Formgebung der Kartusche angepasst ist, wodurch eine Verwechslung der Zusatzstoffe zuverlässig ausgeschlossen werden kann. Nachteilig hierbei ist jedoch, dass für jede Aufnahmevorrichtung eigens angepasste, unterschiedlich geformte Kartuschen hergestellt werden müssen. Zudem ist die Handhabung wenig flexibel, d.h. es können für jeden Zusatzstoff nur die für ihn bestimmten Aufnahmevorrichtungen verwendet werden.

Eine weitere Möglichkeit, die Verwechslung von Behältern beim Einsetzen zu ermöglichen offenbart DE 103 58 999 B3. Diese betrifft eine Reinigungs- und Desinfektionsmaschine mit zwei oder mehreren auswechselbaren Behältern für unterschiedliche Flüssigkeiten, die jeweils mit einer Sauglanze aus den Behältern abgesaugt werden können. Eine Verwechslung wird dort durch spezielle elektrische Steckverbinder ausgeschlossen, wobei Muffenteile an der Maschine und Steckerteile an den Behältern jeweils eine eindeutig zuordenbare Form haben. Ein Behälter kann deshalb nur an die für ihn vorgesehene Sauglanze angesteckt werden. Bei mehr als zwei Behältern und Sauglanzen sind die Steckerteile mechanisch so unterschiedlich ausgeführt sind, dass immer nur ein Paar von Steckerteil und Buchsenteil miteinander , koppelbar sind.

WO 2001/03859 A1 offenbart ein System zum Mischen und Dosieren von Waschmittel und Wasser in einer Waschanlage. Hierzu werden unterschiedliche Chemikalien in unterschiedlichen Behältern vorgesehen, welche computergesteuert in unterschiedlichen Mischverhältnissen und Konzentrationen gemischt werden können.

In US 2004/220817 A1, dem nächstliegenden Stand der Technik, ist eine Steuer- und Überwachungseinrichtung und -verfahren zur Fahrzeugwäsche offenbart, wobei unter Verwendung verschiedenster Daten zur automatischen Steuerung eine. Waschanlage betrieben wird. Als maßgebliche Eingangsdaten, die bei der Dosierung der Waschmittel berücksichtigt werden, sind dort Umweltdaten und chemische Daten angegeben.

Eine andere Möglichkeit, die Verwechslungsgefahr von Kartuschen oder Kanistern beim Einsetzen durch das Bedienpersonal weitgehend zu vermeiden, ist aus der DE 196 32 326 bekannt. Diese offenbart eine Lackierstraße, bei der unterschiedliche Farben in Kleinbehälter abgefüllt werden, wobei die Kleinbehälter als Identifikationsmerkmal einen Barcode aufweisen, der vor dem Öffnen des Kleinbehälters automatisch abgelesen werden kann. Das Ablesen des Barcodes geschieht optisch über ein Barcodelesegerät vor dem Öffnen des Kleinbehälters, also bevor Farbe die Außenseite des Kleinbehälters verschmutzen kann. Ein zuverlässiges Ablesen des Barcodes während des Austrags der Farbe wäre hier nicht möglich, da die optische Erfassung des Barcodes wegen Farbverschmutzungen oder eines Farbnebels in der Umgebung der Kartusche nicht sichergestellt werden kann.

Aufgabe der Erfindung ist es deshalb, eine Fahrzeugwaschanlage und ein Verfahren zur Dosierung von Zusatzstoffen in Behandlungsflüssigkeiten einer Fahrzeugwaschanlage bereitzustellen, die die Verwechslung beim Einsetzen von Kartuschen mit unterschiedlichen Zusatzstoffen vermeidet sowie die einfache, bedarfsgerechte und automatische Dosierung von Zusatzstoffen ermöglicht.

Diese Aufgabe wird durch eine Fahrzeugwaschanlage mit den Merkmalen des Anspruchs 1 und ein Verfahren zur Dosierung von Zusatzstoffen in Behandlungsflüssigkeiten einer Fahrzeugwaschanlage mit den Merkmalen des Anspruchs 7 gelöst. Vorteilhafte Ausgestaltungen und zweckmäßige Weiterbildungen der Erfindung sind in den Unteransprüchen angegeben.

Bei der erfindungsgemäßen Fahrzeugwaschanlage mit mehreren Kartuschenaufnahmen zur Aufnahme von Zusatzstoffen für Behandlungsflüssigkeiten enthaltenden Kartuschen, einer Dosiereinheit zum Dosieren der Zusatzstoffe aus den Kartuschen in die Behandlungsflüssigkeiten der Fahrzeugwaschanlage, und einer Steuereinheit zur Ansteuerung der Dosiereinheit ist erfindungsgemäß vorgesehen, dass die Kartuschen einen mit Kartuschendaten versehenen und zur berührungslosen Datenübertragung eingerichteten Datenträger aufweisen, die Fahrzeugwaschanlage eine Sende- und/oder Empfangseinheit zur Datenübertragung zwischen dem Datenträger und der Steuereinheit enthält, und die Steuereinheit zum Auswählen einer einen bestimmten Zusatzstoff enthaltenden Kartusche anhand der Kartuschendaten eingerichtet ist. Beim erfindungsgemäßen Verfahren zur Dosierung von Zusatzstoffen in Behandlungsflüssigkeiten einer Fahrzeugwaschanlage mit mehreren Kartuschenaufnahmen zur Aufnahme von die Zusatzstoffe enthaltenden Kartuschen, wobei die Kartuschen einen mit Kartuschendaten versehenen und zur berührungslosen Datenübertragung mit einer Steuereinheit eingerichteten Datenträger aufweisen, und einer Dosiereinheit zum Dosieren der Zusatzstoffe aus den Kartuschen in die Behandlungsflüssigkeiten der Fahrzeugwaschanlage, wird durch ein Waschprogramm ein bestimmter Zusatzstoff an die Steuerung angefordert. Anschließend wird eine den Zusatzstoff enthaltende Kartusche anhand der Kartuschendaten in der Steuerung ausgewählt und dann die Dosiereinheit entsprechend der Kartuschendaten angesteuert.

Da die an die Steuerung übertragenen Kartuschendaten einer eingesetzten Kartusche eine eindeutige Zuordnung des Zusatzstoffs zur entsprechenden Kartuschenaufnahme sicherstellen, kann jede Kartusche in jede beliebige Kartuschenaufnahmen eingesetzt werden. Die Auswahl der richtigen Kartusche bzw. Kartuschenaufnahme für die Dosierung des ausgewählten Zusatzstoffs erfolgt dann über die Steuerung. Ein Verwechslungsfehler beim Einsetzen der Kartusche ist demnach vollkommen ausgeschlossen, da die Steuerung die richtige Kartusche automatisch und selbständig erkennt.

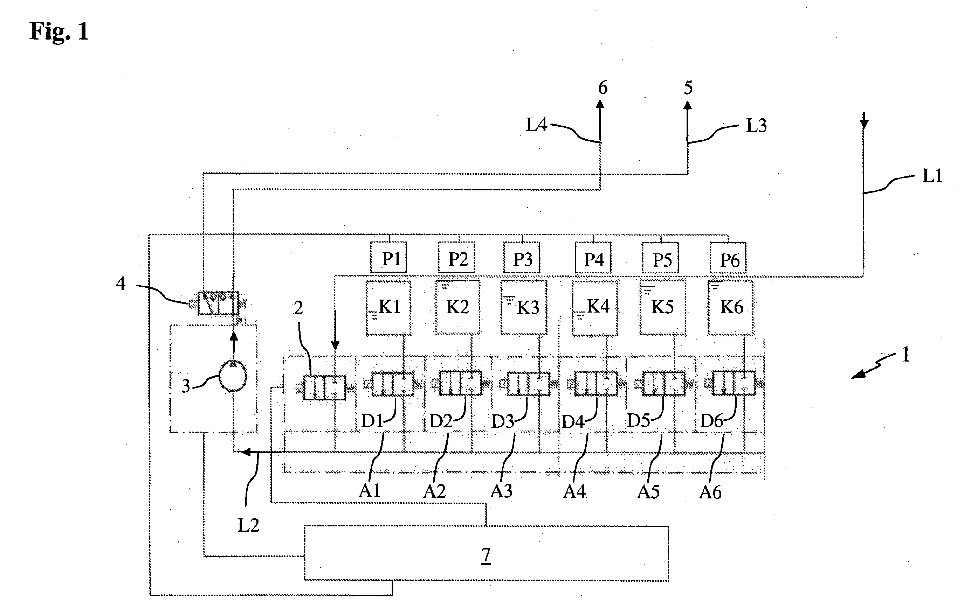

Weitere Besonderheiten und Vorzüge der Erfindung ergeben sich aus der folgenden Beschreibung eines bevorzugten Ausführungsbeispiels anhand der begleitenden **Figur 1****,** welche einen funktionellen Plan der für die Dosierung in einer Fahrzeugwaschanlage relevanten Elemente zeigt.

Eine erfindungsgemäße Fahrzeugwaschanlage, sei es eine Portalwaschanlage mit gegenüber dem feststehenden Fahrzeug beweglichem Waschportal oder eine Durchfahrwaschanlage zu Durchfahren mit dem zu waschenden Fahrzeug, weist mehrere Behandlungsaggregate auf, die mit unterschiedlichen Behandlungsflüssigkeiten versorgt werden müssen. Dies sind beispielsweise Sprüheinrichtungen zum Besprühen des zu waschenden Fahrzeugs mit Vorwaschflüssigkeit zum Einweichen, mit Waschchemie für die eigentliche Wäsche oder mit Sprühwachs.

Die Behandlungsflüssigkeiten werden hierbei durch Beimischen von konzentrierten Zusatzstoffen, z.B. Waschmittelkonzentrat oder Wachskonzentrat, in Wasser bereitgestellt. Hierzu sieht die erfindungsgemäße Fahrzeugwaschanlage eine in Fig. 1 dargestellte Dosiereinheit 1 vor.

Die Dosiereinheit 1 ist eingangsseitig über ein separat ansteuerbares Ventil 2 an eine Wasserzuleitung L1 angeschlossen, so dass über das Ventil 2 Wasser aus einem nicht dargestellten Tank in eine Mischleitung L2 gesteuert eingeleitet werden kann. Alternativ kann anstelle des Ventils 2 auch eine Pumpe zum aktiven Zuführen in die Mischleitung L2 verwendet werden.

An die Mischleitung L2 sind über separat ansteuerbare Dosiervorrichtungen D1-D6 Kartuschenaufnahmen A1-A6 angeschlossen. Die Erfindung ist selbstverständlich nicht auf die in Fig. 1 dargestellten sechs Kartuschenaufnahmen A1-A6 beschränkt, sondern es können auch mehr oder weniger Kartuschenaufnahmen vorgesehen werden, wobei die Kartuschenaufnahmen vorteilhaft auch in Gruppen zusammengefasst werden können. Bei den Dosiervorrichtungen D1-D6 kann es sich um Mikrodosierventile oder Mikrodosierpumpen handeln. Steht das in der Mischleitung L2 über die Wasserzuleitung L1 zugeführte Wasser unter hohem Druck, so werden vorteilhaft zur Dosierung gegen Hockdruck geeignete Mikrodosierpumpen für die Dosiervorrichtungen D1-D6 verwendet.

Die Kartuschenaufnahmen A1-A6 dienen zur lösbaren Aufnahme von Kartuschen K1-K6, welche mit flüssigen bzw. pastösen Behandlungskonzentraten als Zusatzstoffe gefüllt sind. Zum Bestücken einer der Kartuschenaufnahmen A1-A6, beispielsweise der Kartuschenaufnahme A4, wird, sofern vorhanden, die darin befindliche Kartusche K4 herausgenommen und eine neue Kartusche eingesteckt.

Der Füllstand der Zusatzstoffe in den einzelnen Kartuschen K1-K6 ist in Fig. 1 durch drei waagrechte, kopfüber pyramidenförmig angeordnete Striche angedeutet, so das beispielsweise die Kartuschen K2 und K6 ganz gefüllt sind, während die Kartuschen K1 und K4 nur noch zu etwa einem Drittel gefüllt sind. Im vorliegenden Ausführungsbeispiel sind die Kartuschenaufnahmen A1, A2 und A6 mit Kartuschen K1, K2 und K6 bestückt, die ein Waschmittelkonzentrat enthalten, welches dem Wasser für die Fahrzeughauptwäsche beigefügt wird. Die Kartusche K3 enthält ein Vorbehandlungskonzentrat, welches bei der Fahrzeugvorwäsche dem Wasser zugemischt wird. Die Kartusche K4 enthält ein Felgenreinigungskonzentrat, welches nur bei einem speziellen, vom Benutzer der Fahrzeugwaschanlage ausgewählten Felgenreinigungsprogramm dem Wasser zugemischt wird. Die Kartusche K5 enthält einen Enthärter, der das Wasser für das Absprühen der vorher aufgesprühten Behandlungsflüssigkeiten enthärtet, um z.B. Kalkflecken auf dem Fahrzeug nach der Fahrzeugwäsche zu verhindern.

Das oder die vom Waschprogramm, dass der Benutzer ausgewählt hat, angeforderten Zusatzstoffe werden aus der jeweiligen Kartusche K1-K6 über die zugehörige Kartuschenaufnahme A1-A6 und Dosiervorrichtungen D1-D6 in die Mischleitung L2 korrekt dosiert und dort mit dem von der Wasserzuleitung L1 kommenden Wasser vermischt, so das sich die entsprechende angereicherte bzw. vermischte Behandlungsflüssigkeit ergibt. In manchen Fällen kann auch nur Wasser an die Behandlungseinrichtungen zugeführt werden, so dass auch das pure Wasser als Behandlungsflüssigkeit anzusehen ist.

Eine Speisepumpe 3 fördert die vermischte Behandlungsflüssigkeit dann über eine Speiseleitung L3 in einen in Fig. 1 rechten Speiseausgang 5 zu den entsprechenden Behandlungseinrichtungen, beispielsweise Sprühbögen für die Vor- und Hauptwäsche oder zum Absprühen der Waschchemie. Alternativ kann durch eine Verteilereinrichtung 4 die Mischleitung L2 über eine weitere Speiseleitung L4 an einen weiteren Speiseausgang 6 geschaltet werden, so dass vermischte Behandlungsflüssigkeit beispielsweise zur Behandlungseinrichtungen für die Felgenreinigung oder Unterbodenwäsche zugeführt werden kann.

Die Ansteuerung der Dosiereinheit 1, also des Ventils 2, der Speisepumpe 3, der Verteilereinrichtung 4 und der Dosiervorrichtungen D1-D6, erfolgt über die Steuereinheit 7 der Dosiereinheit 1. Die Steuereinheit 7 ist an eine Gesamtsteuerung der Fahrzeugwaschanlage, welche sämtliche Prozesse der Fahrzeugwaschanlage steuert, angeschlossen. Alternative hierzu kann die Steuereinheit 7 auch als Bestandteil der Gesamtsteuerung oder anderer Teilsteuerungen der Fahrzeugwaschanlage ausgebildet sein.

Nachteilig bei bekannten Fahrzeugwaschanlagen ist, dass die Kartuschen stets an eine speziell für den Zusatzstoff der Kartusche vorgesehene Kartuschenaufnahme einzusetzen sind, da die Kartuschenaufnahmen jeweils dem Zusatzstoff zugeordnet sind. Die Steuerung der bekannten Fahrzeugwaschanlage kennt nur diese fest mit der jeweiligen Kartuschenaufnahme verbundene Zuordnung und steuert bei Anforderung dieses Zusatzstoffs genau die zugeordnete Kartuschenaufnahme und deren Dosiervorrichtung an. Ist an dieser Kartuschenaufnahme eine Kartusche mit anderem Zusatzstoff eingesetzt, wird dieser Fehler nicht erkannt und der falsche Zusatzstoff in die Behandlungsflüssigkeit dosiert. Dies kann zu Beschädigungen der empfindlichen Dosiervorrichtungen, der falsch gespeisten Behandlungseinrichtungen oder auch des zu waschenden Fahrzeugs führen.

Um dies zu vermeiden und eine Verwechslung von Kartuschen bzw. Zusatzstoffen sicherzustellen, weist die Dosiereinheit 1 der erfindungsgemäßen Fahrzeugwaschanlage eine Sende- und/oder Empfangseinheit in Form von jeder Kartuschenaufnahme A1-A6 zugeordneten berührungslosen Auslesevorrichtungen P1-P6 auf. Die Auslesevorrichtungen P1-P6 kommunizieren mit an den Kartuschen K1-K6 angeordneten, zur berührungslosen Datenübertragung mit den Auslesevorrichtungen P1-P6 eingerichteten Datenträgern, die im vorliegenden Ausführungsbeispiel durch Transponder gebildet sind. Auf den Datenträgern sind eine Vielzahl von Kartuschendaten gespeichert, wie die genaue Angabe, Bezeichnung und Einfüllmenge des in den Kartuschen K1-K6 enthaltenen Zusatzstoffs, dessen Haltbarkeitsdauer, das vorgeschriebene Verdünnungsverhältnis mit Wasser etc.

Die Steuereinheit 7 ist mit den Auslesevorrichtungen P1-P6 zur Datenübertragung verbunden, wobei dies anstelle der in Fig. 1 gezeigten Kabelverbindung auch kabellos erfolgen kann, z.B. über Funk oder bekannte kabellose Netzwerkverbindungen.

Wird nun beispielsweise eine neue Kartusche K4 in eine beliebige freie Kartuschenaufnahme A1-A6 eingesetzt, so erkennt die zugehörige Auslesevorrichtung P1-P6, dass eine neue Kartusche K4 eingesetzt wurde, liest deren Kartuschendaten aus und übermittelt diese an die Steuereinheit 7, wo die Kartuschendaten vorzugsweise nochmals abgespeichert werden. Dies hat den Vorteil, dass die Auslesevorrichtung P1-P6 nur einmal beim Einsetzen der Kartusche K4 aktiviert werden muss. Während des Betriebs der Fahrzeugwaschanlage wird dann die von der neu eingesetzten Kartusche K4 abgegebene Menge an Zusatzstoff anhand der von der Steuereinheit 7 vorgegebenen Steuerbefehle für die betreffende Dosiervorrichtung D1-D6 berechnet, so dass das ein Leergehen der entsprechenden Kartusche K1-K6 rechtzeitig erkannt wird. Dies weist zudem den Vorteil auf, dass eine aufwändige und störanfällige Füllstandsmessung des Füllstands des Zusatzstoffs in den Kartuschen K1-K6 vermieden werden kann.

Alternativ hierzu kann an jeder Kartuschenaufnahme A1-A6 auch eine Schaltvorrichtung vorgesehen sein, welche beim Einsetzen der Kartusche K4 aktiviert wird und eine eindeutige Identifikation der jeweiligen Kartuschenaufnahme A1-A6 an die Steuereinheit 7 bzw. die jeweilige Auslesevorrichtungen P1-P6 übermittelt. Dies kann beispielsweise ein zusätzlicher Transponder an der Kartuschenaufnahme A1-A6 oder ein von der eingesetzten Kartusche K4 betätigter Schalter sein, der einen Impuls oder ein Dauersignal an die Steuereinheit 7 übermittelt, die einen Auslesevorgang der Kartuschendaten der Kartusche K4 durch die zugehörige Auslesevorrichtungen P1-P6 auslösen. Hierdurch kann besonders gut eine Aktivierung einer Kartuschenaufnahme A1-A6 durchgeführt und folglich eine Verwechslung der Kartuschen K1-K6 vermieden werden, wobei in diesem Fall dann auch auf eine separate Auslesevorrichtung P1-P6 für jede Kartuschenaufnahme A1-A6 verzichtet werden könnte und nur noch eine einzige Auslesevorrichtung benötigt würde, da die Identifikation der einzelnen Kartuschenaufnahme A1-A6 über ihre Schaltvorrichtung erfolgt.

Anstelle der Berechnung der während des Betriebs der Fahrzeugwaschanlage von der Kartusche K1-K6 abgegebenen Menge ihres Zusatzstoffs anhand der von der Steuereinheit 7 vorgegebenen Steuerbefehle für die betreffende Dosiervorrichtung D1-D6 kann die Menge des in den Kartuschen K1-K6 vorhandenen Zusatzstoffs gemessen werden, beispielsweise über einen an den Kartuschenaufnahmen A1-A6 oder den Kartuschen K1-K6 selbst vorgesehene Füllstandssensor.

Unterschreitet der Füllstand des Zusatzstoffs, sei es der gemessene oder der berechnete Füllstand, in einer der Kartuschen K1-K6 einen in der Steuereinheit 7 vorgegebenen Grenzwert, so gibt diese ein Warnsignal an das Bedienpersonal der Fahrzeugwaschanlage aus, dass die betreffende Kartusche K1-K6 bald ersetzt werden muss. Anhand des Füllstands kann dann weiter berechnet und ausgegeben werden, für wie viele Fahrzeugwäschen der in der betreffenden Kartusche K1-K6 noch vorhandene Zusatzstoff ausreicht. Gleichzeitig kann die Steuereinheit 7 bei Überschreiten eines weiteren Grenzwerts die Fahrzeugwaschanlage rechtzeitig stillsetzen, so dass ein unerwünschtes Leergehen eines Zusatzstoffs während des Waschvorgangs eines Fahrzeugs vermieden werden kann.

Zudem können vorteilhaft aufgrund der beliebigen Positionierung der Kartuschen K1-K6 in den Kartuschenaufnahmen A1-A6 bereits frühzeitig Vorkehrungen gegen das Fehlen eines bestimmten Zusatzstoffs getroffen werden. Die wird am Beispiel der Kartuschen K1, K2 und K6 deutlich, welche alle den gleichen Zusatzstoff enthalten. So wird bei Anforderung dieses Zusatzstoffs durch ein Waschprogramm an die Steuereinheit 7 zuerst immer die Kartusche K1 gewählt, bis diese vollkommen leer ist. Vor dem Leerwerden wird ein Signal an das Bedienpersonal übermittelt, dass das Leerwerden und gleichzeitig die Mitteilung anzeigt, dass der Zusatzstoff auch noch in den vollen Kartuschen K2 und K6 bevorratet ist. Ist die Kartusche K1 dann ganz entleert, so wird während des Betriebs der Fahrzeugwaschanlage auf die Kartusche K2 oder K6 umgeschaltet, so dass es keine Unterbrechung oder Stillstand des Betriebs und insbesondere eines gerade laufenden Waschvorgangs gibt. Aufgrund der gemessenen oder berechneten Füllmenge in der Kartusche K1 und der Kartusche K2 oder K6 kann die Umschaltung von Kartusche K1 auf eine der beiden anderen Kartuschen sogar während des Dosierens aus Kartuschen K1 in die Mischleitung L2 erfolgen, so dass die Kartusche K1 vollständig entleert werden kann. Die Umschaltung kann vorteilhaft auch überlappend erfolgen, so dass für einen oder mehrere Waschvorgänge aus den Kartuschen K1 und K2 oder K6 dosiert wird. Aufgrund der nur geringen Mengen, die von den hochkonzentrierten Zusatzstoffen für einen Waschvorgang benötigt werden, findet folglich eine optimale Ausnutzung der Zusatzstoffe statt, was sowohl aus wirtschaftlichen wie auch aus ökologischen Gründen wünschenswert und von großem Vorteil ist.

Eine weitere Möglichkeit, die korrekte Dosierung der Zusatzstoffe vorzunehmen, besteht in der Berücksichtigung von Umweltdaten und Fahrzeugdaten. So hängt die Menge des benötigten Zusatzstoffes teilweise von der Witterung ab. In regnerischen Perioden oder im Winter sind die zu waschenden Fahrzeuge üblicherweise stärker und mit stärker anhaftenden Verunreinigungen verschmutzt, so dass den Behandlungsflüssigkeiten mehr Zusatzstoffe zum Anlösen und Reinigen der Fahrzeugoberflächen beigefügt werden müssen als in trockenen Perioden, beispielsweise im Sommermonaten. Dies kann in der Steuerung durch zusätzliche Messwerte, beispielsweise von einer Wetterstation mit Angaben über Luftfeuchtigkeit, Niederschlägen, Temperaturen, Windstärken etc. eingeführt werden, oder durch Berücksichtigung von Wetterberichten. Auch können in der Steuerung Angaben über die Wasserqualität am Standort der Fahrzeugwaschanlage berücksichtigt werden, beispielsweise über die Wasserhärte oder den Verkalkungsgrad des Wasser. So kann bei besonders hartem Wasser eine zusätzliche Kartusche mit einem Wasserenthärter vorgesehen werden, der bei jedem anderen Waschprogramm zusätzlich der Behandlungsflüssigkeit beigefügt wird.

Zusätzlich oder alternativ können auch Angaben über das zu waschende Fahrzeug, welche beispielsweise durch das Bedienpersonal in die Steuereinheit eingegeben oder über eine automatische Konturerfassung an die Steuereinheit weitergegeben werden, bei der Dosierung der Zusatzstoffe berücksichtigt werden. So kann für ein besonders großes Fahrzeug mit großen zu waschenden Oberflächen mehr Zusatzstoff dosiert werden, als bei einem kleinen Fahrzeug. Auch kann die Anzahl der wartenden und zu waschenden Fahrzeuge berücksichtigt werden, so dass bei einem höheren Fahrzeugdurchsatz die Dosierung der Zusatzstoffe entsprechend erhöht wird, da die Verweildauer der Behandlungsflüssigkeiten auf dem Fahrzeug kürzer ist.

In einer weiteren Ausgestaltung der Erfindung kann beim Auswählen einer den Zusatzstoff enthaltenden Kartusche K1-K6 anhand der Kartuschendaten vorteilhaft die Kartusche K1-K6 mit dem ältesten Zusatzstoff ausgewählt werden. In noch einer weiteren Ausgestaltung der Erfindung kann beim Auswählen einer den Zusatzstoff enthaltenden Kartusche K1-K6 anhand der Kartuschendaten vorteilhaft eine Kartusche K1-K6 mit abgelaufenem Zusatzstoff erkannt und von der Steuereinheit 7 ein Warn- und/oder Fehlersignal ausgegeben werden

## Patentansprüche

1. Fahrzeugwaschanlage mit mehreren Kartuschenaufnahmen (A1-A6) zur Aufnahme von Zusatzstoffen für Behandlungsflüssigkeiten enthaltenden Kartuschen (K1-K6), einer Dosiereinheit (1) zum Dosieren der Zusatzstoffe aus den Kartuschen (K1-K6) in die Behandlungsflüssigkeiten der Fahrzeugwaschanlage, und einer Steuereinheit (7) zur Ansteuerung der Dosiereinheit (1), wobei die Kartuschen (K1-K6) einen mit Kartuschendaten versehenen und zur berührungslosen Datenübertragung eingerichteten Datenträger aufweisen, die Fahrzeugwaschanlage zumindest eine Empfangseinheit (P1-P6) zur Datenübertragung zwischen dem Datenträger und der Steuereinheit (7) enthält, und die Steuereinheit (7) zum Auswählen einer einen bestimmten Zusatzstoff enthaltenden Kartusche (K1-K6) anhand der Kartuschendaten eingerichtet ist, wobei die Fahrzeugwaschanlage von einer leer werdenden Kartusche (K1-K6) auf eine mit dem Zusatzstoff ausreichend gefüllte Kartusche (K1-K6) um schaltbar ist.

2. Fahrzeugwaschanlage nach Anspruch 1, **dadurch gekennzeichnet, dass** sie eine Sendeeinheit (P1-P6) zur Datenübertragung zwischen dem Datenträger und der Steuereinheit (7) enthält.

3. Fahrzeugwaschanlage nach Anspruch 1 oder 2, **dadurch gekennzeichnet, dass** die Dosiereinheit (1) eine Verteilereinrichtung (4) zum Dosieren von Zusatzstoffen in unterschiedliche Zuleitungen (L3, L4) der Fahrzeugwaschanlage aufweist.

4. Fahrzeugwaschanlage nach einem der Ansprüche 1 bis 3, **dadurch gekennzeichnet, dass** die Dosiereinheit (1) für jede Kartuschenaufnahme (A1-A6) eine eigene, separat ansteuerbare Dosiervorrichtung (D1-D6) aufweist.

5. Fahrzeugwaschanlage nach einem der Ansprüche 1 bis 3, **dadurch gekennzeichnet, dass** die Dosiereinheit (1) für mehrere Kartuschenaufnahmen (A1-A6) eine gemeinsame Dosiervorrichtung aufweist.

6. Fahrzeugwaschanlage nach einem der vorangehenden Ansprüche, **dadurch gekennzeichnet, dass** an jeder Kartuschenaufnahme (A1-A6) eine Schaltvorrichtung mit einer eindeutigen Identifikation der jeweiligen Kartuschenaufnahme (A1-A6) vorgesehen ist, wobei die Schaltvorrichtung beim Einsetzen einer Kartusche (K1-K6) aktivierbar und zum Übermitteln der Identifikation an die Steuereinheit (7) eingerichtet ist.

7. Verfahren zur Dosierung von Zusatzstoffen in Behandlungsflüssigkeiten einer Fahrzeugwaschanlage mit mehreren Kartuschenaufnahmen (A1-A6) zur Aufnahme von die Zusatzstoffe enthaltenden Kartuschen (K1-K6),wobei die Kartuschen (K1-K6) einen mit Kartuschendaten versehenen und zur berührungslosen Datenübertragung mit einer Steuereinheit (7) eingerichteten Datenträger aufweisen, und einer Dosiereinheit (1) zum Dosieren der Zusatzstoffe aus den Kartuschen (K1-K6) in die Behandlungsflüssigkeiten der Fahrzeugwaschanlage, wobei beim Einsetzen einer neuen, gefüllten Kartusche (K1-K6) deren Kartuschendaten ausgelesen und in der Steuereinheit (7) abgespeichert werden, mit folgenden Schritten:
a) Anfordern eines Zusatzstoffs durch ein Waschprogramm an die Steuereinheit (7),
b) Auswählen einer den Zusatzstoff enthaltenden Kartusche (K1-K6) anhand der Kartuschendaten,
c) Ansteuern der Dosiereinheit (1) entsprechend der Kartuschendaten,
wobei die Menge der in den Kartuschen (K1-K6) vorhandenen Zusatzstoffe von der Steuereinheit (7) anhand der Kartuschendaten und von Dosierdaten bestimmt wird, wobei eine leer werdende Kartusche (K1-K6) erkannt und daraufhin ein Warn- und/oder Fehlersignal ausgegeben wird, und
wobei in Schritt b) automatisch von der leer werdende Kartusche (K1-K6) auf eine mit dem Zusatzstoff ausreichend gefüllte Kartusche (K1-K6) umgeschaltet wird.

8. Verfahren nach Anspruch 7, **dadurch gekennzeichnet, dass** in Schritt b) die Kartusche (K1-K6) mit der geringsten Menge des Zusatzstoffs ausgewählt wird.

9. Verfahren nach einem der Ansprüche 7 bis 8, **dadurch gekennzeichnet, dass** in Schritt b) anhand der Kartuschendaten die Kartusche (K1-K6) mit dem ältesten Zusatzstoff ausgewählt wird.

10. Verfahren nach einem der Ansprüche 7 bis 9, **dadurch gekennzeichnet, dass** anhand der Kartuschendaten eine Kartusche (K1-K6) mit abgelaufenem Zusatzstoff erkannt und von der Steuereinheit (7) ein Warn- und/oder Fehlersignal ausgegeben wird.

11. Verfahren nach einem der Ansprüche 7 bis 10, **dadurch gekennzeichnet, dass** in Schritt c) die Dosierung des Zusatzstoffs anhand von Fahrzeugdaten erfolgt wird.

12. Verfahren nach Anspruch 11, **dadurch gekennzeichnet, dass** die Fahrzeugdaten eine Kontur, Länge und/oder Farbe eines zu waschenden Fahrzeugs enthalten.

## Claims

1. Vehicle washing installation having a plurality of cartridge receptacles (A 1-A6) for receiving cartridges (K1-K6) containing additives for treatment liquids, a metering unit (1) for metering the additives from the cartridges (K1-K6) into the treatment liquids of the vehicle washing installation, and a control unit (7) for actuating the metering unit (1), wherein the cartridges (K1-K6) exhibit a data carrier which is provided with cartridge data and configured for contactless transmission of data, the vehicle washing installation comprises at least one receiving unit (P1-P6) for transmission of data between the data carrier and the control unit (7), and the control unit (7) is configured for selection of a cartridge (K1-K6) containing a particular additive by reference to the cartridge data, the vehicle washing installation being switchable from a cartridge (K1-K6) which is becoming empty to a cartridge (K1-K6) which is sufficiently filled with the additive.

2. Vehicle washing installation according to claim 1, **characterised in that** it comprises a transmitting unit (P1-P6) for transmission of data between the data carrier and the control unit (7).

3. Vehicle washing installation according to claim 1 or 2, **characterised in that** the metering unit (1) exhibits a distributing device (4) for metering of additives into different feed lines (L3, L4) of the vehicle washing installation.

4. Vehicle washing installation according to one of claims 1 to 3, **characterised in that** the metering unit (1) exhibits a separately actuatable metering device (D1-D6) for each cartridge receptacle (A1-A6).

5. Vehicle washing installation according to one of claims 1 to 3, **characterised in that** the metering unit (1) exhibits a common metering device for a plurality of cartridge receptacles (A1-A6).

6. Vehicle washing installation according to one of the preceding claims, **characterised in that** each cartridge receptacle (A1-A6) is provided with a switching device with a unique identifier for the particular cartridge receptacle (A1-A6), the switching device being activateable when a cartridge (K1-K6) is inserted and configured to transmit the identifier to the control unit (7).

7. Method for metering of additives into treatment liquids of a vehicle washing installation having a plurality of cartridge receptacles (A1-A6) for receiving cartridges (K1-K6) containing the additives, the cartridges (K1-K6) exhibiting a data carrier which is provided with cartridge data and configured for contactless transmission of data with a control unit (7), and a metering unit (1) for metering the additives from the cartridges (K1-K6) into the treatment liquids of the vehicle washing installation, whereby when a new full cartridge (K1-K6) is inserted, the cartridge data thereof are read out and stored in the control unit (7), with the following steps:
a) a request for an additive by a washing programme is transmitted to the control unit (7),
b) a cartridge (K1-K6) containing the additive is selected by reference to the cartridge data,
c) the metering unit (1) is actuated according to the cartridge data,
whereby the quantity of additives present in the cartridges (K1-K6) is determined by the control unit (7) by reference to the cartridge data and metering data,
whereby a cartridge (K1-K6) which is becoming empty is recognised and thereupon a warning and/or fault signal is emitted, and
whereby in step b) switching automatically takes place from the cartridge (K1-K6) which is becoming empty to a cartridge (K1-K6) which is sufficiently filled with the additive.

8. Method according to claim 7, **characterised in that** in step b) the cartridge (K1-K6) with the smallest quantity of the additive is selected.

9. Method according to one of claims 7 to 8, **characterised in that** in step b) the cartridge (K1-K6) with the oldest additive is selected by reference to the cartridge data.

10. Method according to one of claims 7 to 9, **characterised in that** a cartridge (K1-K6) which has run out of additive is recognised by reference to the cartridge data and a warning and/or fault signal is emitted by the control unit (7).

11. Method according to one of claims 7 to 10, **characterised in that** in step c) the metering of the additive is carried out by reference to vehicle data.

12. Method according to claim 11, **characterised in that** the vehicle data comprise a contour, length and/or paint of a vehicle to be washed.

## Revendications

1. Station de lavage pour véhicule avec plusieurs logements de cartouche (A1-A6) servant au logement d'adjuvants pour des cartouches (K1-K6) contenant des liquides de traitement d'une unité de dosage (1) pour le dosage des adjuvants sortant des cartouches (K1-K6) dans les liquides de traitement de la station de lavage pour véhicule, et une unité de commande (7) pour la commande de l'unité de dosage (1), les cartouches (K1-K6) présentant un support de données aménagé pour la transmission de données sans contact et pourvu de données de cartouche, la station de lavage pour véhicule contenant au moins une unité de réception (P1-P6) pour la transmission de données entre le support de données et l'unité de commande (7), et l'unité de commande (7) étant aménagée pour la sélection d'une cartouche (K1-K6) contenant un adjuvant déterminé à l'aide des données de cartouche, la station de lavage pour véhicule pouvant passer d'une cartouche (K1-K6) se vidant à une cartouche (K1-K6) suffisamment remplie d'adjuvant.

2. Station de lavage pour véhicule selon la revendication 1, **caractérisée en ce qu'**elle contient une unité d'émission (P1-P6) pour la transmission de données entre le support de données et l'unité de commande (7).

3. Station de lavage pour véhicule selon la revendication 1 ou 2, **caractérisée en ce que** l'unité de dosage (1) présente un dispositif de répartition (4) pour le dosage d'adjuvants dans différentes conduites d'amenée (L3, L4) de la station de lavage pour véhicule.

4. Station de lavage pour véhicule selon l'une quelconque des revendications 1 à 3, **caractérisée en ce que** l'unité de dosage (1) présente, pour chaque logement de cartouche (A1-A6), un propre dispositif de dosage (D1-D6) pouvant être commandé séparément.

5. Station de lavage pour véhicule selon l'une quelconque des revendications 1 à 3, **caractérisée en ce que** l'unité de dosage (1) présente un dispositif de dosage commun pour plusieurs logements de cartouche (A1-A6).

6. Station de lavage pour véhicule selon l'une quelconque des revendications précédentes, **caractérisée en ce que**, sur chaque logement de cartouche (A1-A6), un dispositif de commutation est prévu avec une identification claire du logement de cartouche (A1-A6) respectif, le dispositif de commutation pouvant être activé lors de l'insertion d'une cartouche (K1-K6) et aménagé pour la transmission de l'identification à l'unité de commande (7).

7. Procédé de dosage d'adjuvants dans des liquides de traitement d'une station de lavage pour véhicule avec plusieurs logements de cartouche (A1-A6) servant au logement de cartouches (K1-K6) contenant les adjuvants, les cartouches (K1-K6) présentant un support de données aménagé pour la transmission de données sans contact avec une unité de commande (7) et pourvu de données de cartouche, et une unité de dosage (1) pour le dosage des adjuvants sortant des cartouches (K1-K6) dans les liquides de traitement de la station de lavage pour véhicule, lors de l'insertion d'une nouvelle cartouche remplie (K1-K6),dont les données de cartouche sont lues et enregistrées dans l'unité de commande (7), le procédé comprenant les étapes suivantes:
a) demande d'un adjuvant par un programme de lavage à l'unité de commande (7),
b) sélection d'une cartouche (K1-K6) contenant l'adjuvant à l'aide des données de cartouche,
c) commande de l'unité de dosage (1) selon les données de cartouche,
la quantité d'adjuvants présents dans les cartouches (K1-K6) étant déterminée par l'unité de commande (7) à l'aide des données de cartouche et des données de dosage, dès qu'une cartouche (K1-K6) qui se vide est détectée, un signal d'avertissement et/ou d'erreur est émis, et,
à l'étape b), dès qu'une cartouche (K1-K6) est détectée vide, celle-ci est reliée automatiquement à une cartouche (K1-K6) suffisamment remplie d'adjuvant.

8. Procédé selon la revendication 7, **caractérisé en ce que**, à l'étape b), la cartouche (K1-K6) contenant la quantité la plus faible d'adjuvant est sélectionnée.

9. Procédé selon l'une quelconque des revendications 7 à 8, **caractérisé en ce que**, à l'étape b), la cartouche (K1-K6) contenant l'adjuvant le plus ancien est sélectionnée à l'aide des données de cartouche.

10. Procédé selon l'une quelconque des revendications 7 à 9, **caractérisé en ce que**, à l'aide des données de cartouche, une cartouche (K1-K6) contenant un adjuvant périmé est détectée et un signal d'avertissement et/ou d'erreur est émis par l'unité de commande (7).

11. Procédé selon l'une quelconque des revendications 7 à 10, **caractérisé en ce que**, à l'étape c), le dosage de l'adjuvant est réalisé à l'aide de données de véhicule.

12. Procédé selon la revendication 11, **caractérisé en ce que** les données de véhicule contiennent un contour, une longueur et/ou une couleur d'un véhicule à laver.
